# EUROPEAN PATENT APPLICATION

(11) **EP 4 557 397 A1**
(43) Date of publication of application: **21.05.2025**
(21) Application number: 24852934.9
(22) Date of filing: 31.05.2024
(51) Int. Cl.: H01M 4/38

(54) **NEGATIVE ELECTRODE MATERIAL AND PREPARATION METHOD THEREFOR, AND LITHIUM ION BATTERY**

(30) Priority: 28.09.2023 CN 202311280138
(71) Applicant: BTR NEW MATERIAL GROUP CO., LTD., Shenzhen, Guangdong 518106 (CN)
(72) Inventor: LIU, Mingjie, Shenzhen, Guangdong 518106 (CN); HE, Peng, Shenzhen, Guangdong 518106 (CN); XIAO, Chengmao, Shenzhen, Guangdong 518106 (CN); GUO, Eming, Shenzhen, Guangdong 518106 (CN); REN, Jianguo, Shenzhen, Guangdong 518106 (CN); HE, Xueqin, Shenzhen, Guangdong 518106 (CN)
(74) Representative: Zaboliene, Reda
(86) International application number: PCT/CN2024/096641
(87) International publication number: WO 2025/066243

(57) **Abstract**

The present disclosure relates to an anode material and its preparation method, as well as a lithium-ion battery. The anode material includes an active material including a porous matrix and a silicon matrix. At least a portion of the silicon matrix is distributed in pores of the porous matrix. In the infrared spectrum obtained by testing the anode material using an infrared spectrometer, there are a stretching vibration peak of SiH₂ bond at a wave number of 2090 cm⁻¹ and a stretching vibration peak of SiH bond at a wave number of 2000 cm⁻¹. A ratio Z of an area of the stretching vibration peak of the SiH₂ bond to an area of the stretching vibration peak of the SiH bond is in a range from 0.01 to 5.0. Within the above defined range, it indicates that the silicon matrix in the anode material mainly exists in the form of SiH bonds. The stability of SiH bonds is greater than that of SiH₂ bonds. A silicon matrix with more SiH bonds is beneficial for improving the structural stability of the anode material, enhancing mechanical properties of the silicon matrix, reducing occurrence of side reactions between the anode material and electrolyte, and thereby improving cycling and expansion properties of the anode material.

## Description

### TECHNICAL FIELD

The present disclosure relates to a field of anode material technology, particularly relates to an anode material, a method for making the anode material, and a lithium-ion battery.

### BACKGROUND

Silicon-based anode material has advantages of high specific capacity, low voltage platform, environmental friendliness, and abundant resources, and are expected to replace graphite anodes in the next generation of high-energy lithium-ion batteries. However, silicon undergoes a significant volume change during the extraction/insertion processes, which can easily lead to particle pulverization and detachment from the collector. In addition, repeated volume changes of silicon materials during electrochemical cycling also result in the continuous destruction and regeneration of SEI films formed on a surface of silicon materials, leading to a continuous consumption of lithium ions and ultimately resulting in rapid capacity decay.

The crystalline silicon in the silicon-based anode materials is a main factor causing the volume expansion changes in the silicon-based anode materials. In order to solve these problems, researchers usually modify the crystalline silicon by processes such as nano treatment (impart a nano size to the crystalline silicon), carbon coating, and polymer coating, and such processes can suppress a volume expansion of the crystalline silicon to some extent. However, the above methods have limited effects on suppressing the volume expansion of silicon and cannot meet the requirements of existing high-energy density lithium-ion batteries.

Therefore, there is an urgent need for an anode material that has a low expansion and excellent cycling performance.

### Summary

The present embodiment provides an anode material, a method for making the anode material, and a lithium-ion battery, which can improve the expansion performance and cycling performance of the anode material.

In a first aspect, the present embodiment provides an anode material. The anode material includes an active material. The active material includes a porous matrix and a silicon matrix, at least a portion of the silicon matrix is distributed in pores of the porous matrix. In an infrared spectrum obtained by testing the anode material using an infrared spectrometer, there are a stretching vibration peak of SiH₂ bond at a wave number of 2090 cm⁻¹ and a stretching vibration peak of SiH bond at a wave number of 2000 cm⁻¹. A ratio Z of an area of the stretching vibration peak of the SiH₂ bond to an area of the stretching vibration peak of the SiH bond is in a range from 0.01 to 5.0.

The technical solution of the present disclosure has at least the following beneficial effects.

The active material of the anode material in the present disclosure includes the porous matrix and the silicon matrix. The silicon matrix is distributed in the pores of the porous matrix. The porous matrix can alleviate a volume expansion of the silicon matrix and act as an elastic conductor for the anode material, providing ion and electron transport paths for the anode material during charging and discharging, enhancing conductivity of the anode material, and improving the rate performance of the anode material. Embedding the silicon matrix into the pores of the porous matrix can also reduce agglomeration of the silicon matrix particles, thereby reducing problem of structural damage to the entire anode material due to stress concentration. Secondly, the silicon matrix has a high lithium insertion voltage (~0.4V), which can suppress formation of lithium dendrites (lithium dendrite formation potential ~0V), thereby improving a safety performance of the anode material used in batteries. In addition, the ratio Z of an area of the stretching vibration peak of the SiH₂ bond to an area of the stretching vibration peak of the SiH bond in the anode material is in a range from 0.01 to 5.0. The stability of the SiH bond is greater than that of the SiH₂ bond, and the silicon matrix with more SiH bonds is beneficial for improving the structural stability of the anode material, reducing occurrence of side reactions between the anode material and the electrolyte, and thereby enhancing the cycling performance and expansion performance of the anode material.

### BRIEF DESCRIPTION OF THE DRAWINGS

Implementations of the present technology will now be described, by way of embodiments only, with reference to the attached figures.
FIG. 1 is a flow chart for making an anode material in the present disclosure.
FIG. 2 is an infrared spectrum of the anode material prepared in Example 2 of the present disclosure.
FIG. 3 is a Raman spectrum of the anode material prepared in Example 2 of the present disclosure.

### DETAILED DESCRIPTION

In order to better understand the technical solution of the present disclosure, a detailed description of the embodiments of the present disclosure will be provided below in conjunction with the accompanying drawings.

It should be clarified that the described embodiments are only a part of the embodiments of the present disclosure, and not all embodiments. Based on the embodiments in the present disclosure, all other embodiments obtained by ordinary skilled persons in this field without creative labor are within the scope of protection of the present disclosure.

In addition, the terms "first" and "second" are only used for descriptive purposes and cannot be understood as indicating or implying relative importance or implying the number of technical features indicated. Thus, the features limited to "first" and "second" may explicitly or implicitly include one or more of these features.

In order to facilitate understanding of the present disclosure, specific terms are appropriately defined in the present disclosure. Unless otherwise defined in this document, the scientific and technical terms used in the present disclosure have meanings commonly understood by those skilled in the art to which the present disclosure belongs.

An embodiment of the present disclosure provides an anode material. The anode material includes an active material. The active material includes a porous matrix and a silicon matrix. At least a portion of the silicon matrix is distributed in pores of the porous matrix. In an infrared spectrum obtained by testing the anode material using an infrared spectrometer, a stretching vibration peak at a wave number of 2090 cm⁻¹ corresponding to SiH₂ bond and a stretching vibration peak at a wave number of 2000 cm⁻¹ corresponding to SiH bond are observed. A ratio Z of an area of the vibration peak of the SiH₂ bond to an area of the vibration peak of the SiH bond is in a range of 0.01-5.0.

In the above scheme, the active material of the anode material of the present disclosure includes the porous matrix and the silicon matrix, and the silicon matrix is distributed in the pores of the porous matrix. The porous matrix can alleviate a volume expansion of the silicon matrix, act as an elastic conductor for the anode material, provide ion and electron transport paths for the anode material during charging and discharging process, enhance a conductivity of the anode material, and improve a rate performance of the anode material. The silicon matrix embedding into the pores of the porous matrix can also reduce agglomeration of the silicon matrix particles, which can lead to stress concentration and damage to the entire anode material structure. Secondly, the silicon matrix has a high lithium insertion voltage (0.4V), which can suppress formation of lithium dendrites (lithium dendrite formation potential 0V), thereby improving safety performance of anode materials used in batteries. In addition, a value of Z of the area of the vibration peak of SiH₂ bond to that of SiH bond in the anode material of the present disclosure is 0.01-5.0. A stability of SiH bond is greater than that of SiH₂ bond, and the silicon matrix having more SiH bonds is beneficial for improving a structural stability of the anode material, reducing occurrence of side reactions between the anode material and the electrolyte, and thereby enhancing the cycling performance and expansion performance of the anode material. The pyrolysis process of silane produces SiH bonds, SiH₂ bonds, and SiH₃ bonds, and SiH₃ bonds only exist in large quantities when pyrolysis of the silane is insufficient.

Compared to the anode materials containing crystalline silicon, the crystalline silicon is transformed into amorphous Li-Si during lithium insertion, resulting in a two-phase reaction. In this disclosure, due to a disordered structure of the silicon matrix, a homogeneous reaction occurs during lithium insertion. Therefore, a volume expansion of the silicon matrix in this disclosure is less than that of the crystalline silicon, and the volume expansion of the silicon matrix in this disclosure is less, which can improve the expansion performance of the anode material.

In this disclosure, a value of Z can be 0.01, 0.05, 0.1, 0.3, 0.8, 1.0, 2.0, 3.0, 4.0, or 5.0, etc., it can also be other values within the above range, and this disclosure does not limit it. Within the above limited range, the less the value of Z, the more SiH bonds there are in the silicon matrix, the more stable the silicon matrix is, and the more conducive it is to improve the cycling and expansion performance of the anode material. If the value of Z is greater than 5, it indicates that there are too many SiH₂ bonds in the silicon matrix of the anode material, and the SiH₃ bonds may also appear, leading to structural instability of the anode material and a decrease in its cycling and expansion properties. The preferred value of Z is 0.05-3.0. Further preferably, the value of Z is 0.05-0.5.

In some embodiments, the silicon matrix includes silicon particles.

In some embodiments, a porosity of the anode material is in a range from 0.01% to 10%. For example, it can be 0.01%, 1%, 3%, 5%, 8%, or 10%, etc. Of course, it can also be other values within the above range, and this disclosure does not limit it. Within the aforementioned limits, it is possible to increase the energy density of anode materials while suppressing volume expansion.

In this disclosure, the anode material is soaked in a concentrated nitric acid having a concentration of 1M for 4 hours, and then HF acid solution having a 20% mass percentage is dropped into the anode material one by one, which will produce yellow smoke. The process is repeated multiple times until no more yellow smoke is produced in the solution. Finally, a residue was digested with concentrated nitric acid with a concentration of 1M, and then washed and dried to obtain the anode material after removing the silicon matrix, namely the porous matrix.

In some embodiments, the porosity of the anode material after removing the silicon matrix is in a range from 30% to 70%. For example, 30%, 40%, 50%, 55%, 60%, or 70%. Of course, it can also be other values within the above range, and this disclosure does not limit it. Within the aforementioned limited range, the anode material after removing the silicon matrix has sufficient space to disperse the silicon matrix and has sufficient anti crushing strength, which can improve the energy density of the anode material while suppressing its volume expansion.

In some embodiments, an average pore size of the anode material after removing the silicon matrix is in a range from 0.2 nm to 10 nm, which can be 0.2 nm, 0.5 nm, 2 nm, 5 nm, 8 nm, or 10 nm, etc. Of course, it can also be other values within the above range, and this disclosure does not limit it.

In some embodiments, an average particle size of the silicon matrix is in a range from 1 nm to 10 nm, such as 1 nm, 2 nm, 3 nm, 4 nm, 5 nm, 6 nm, 7 nm, 8 nm, 9 nm, or 10nm. Of course, other values within the above range are also possible, and this disclosure does not limit it. Within the above particle size range, it is advantageous for the silicon matrix to be embedded into the pores of the porous matrix. In one embodiment, the silicon matrix has an average particle size of 1nm-5nm.

In some embodiments, a weight percentage of the silicon matrix in the anode material is in a range from 5% to 90%, such as 5%, 10%, 20%, 50%, 70%, 80%, or 90%, etc. Of course, other values within the above range are also possible, and this disclosure does not limit it. Within the above limitations, it indicates that anode material in this disclosure with a higher load of the silicon matrix is beneficial for improving the capacity performance of the anode material.

In some embodiments, at least a portion of the silicon matrix is distributed on a surface of the porous matrix. It can be understood that in order to improve a rate performance of the anode material, the silicon matrix of the present disclosure is mainly distributed inside the porous matrix.

In some embodiments, the anode material further includes a coating layer on at least a portion of the surfaces of the active material. On the one hand, the coating layer can reduce occurrence of side reactions caused by the electrolyte entering in the anode material, resulting in a decrease in initial efficiency and capacity. On the other hand, the coating layer can alleviate the volume expansion of silicon to a certain extent, reduce the volume expansion of the entire anode material, and reduce a swelling of the electrode sheet made of the anode material.

In some embodiments, the coating layer includes at least one of carbon material, metal oxide, and metal sulfide.

In some embodiments, the coating layer may be at least one of a carbon layer, a metal oxide layer, and a metal sulfide layer. In some embodiments, the carbon material includes at least one from graphene, soft carbon, hard carbon, and conductive polymers. Specifically, the conductive polymer includes at least one of polyaniline, polyacetylene, polypyrrole, polythiophene, poly-3-hexylthiophene, poly (p-phenylene ene), poly (pyridine), and poly (phenylene glycol).

In some embodiments, the metal oxide includes at least one of titanium oxide, aluminum oxide, lithium oxide, cobalt oxide, and vanadium oxide.

In some embodiments, the metal sulfide includes at least one of tin sulfide, molybdenum sulfide, titanium sulfide, iron sulfide, and copper sulfide.

In some embodiments, a thickness of the coating layer is in a range from 5nm to 500nm. For example, it can be 5nm, 10nm, 30nm, 80nm, 120nm, 200nm, 300nm, 400nm, or 500nm, etc. Of course, it can also be other values within the above range, which are not limited. The preferred thickness of the coating layer is between 10nm and 100nm. The coating layer can reduce contact between the silicon and electrolyte, reduce formation of passivation film, and improve reversible capacitance of the battery. If the thickness of the coating layer is greater than 500nm, the lithium-ion transport efficiency will be reduced, which is not conducive to high rate charging and discharging of the anode material and reduces a comprehensive performance of the anode material. The thickness of the coating layer is less than 5nm, which is not conducive to increasing the conductivity of the anode material and has a weak suppression performance on the volume expansion of the anode material, resulting in poor cycling performance.

In some embodiments, a median particle size D50 of the anode material is in a range from 5 µm to 10 µm. For example, it can be 5 µm, 6 µm, 7 µm, 8 µm, 9 µm, or 10 µm, etc. Of course, it can also be other values within the above range, and this disclosure does not limit it. Preferably, the anode material has a median particle size D50 of 5 µm-8 µm. Further preferably, the anode material has a median particle size D50 of 7 µm-8 µm.

In some embodiments, a minimum particle size D00 of the anode material is in a range from 1 µm to 3 µm. For example, it can be 1 µm, 1.5 µm, 2 µm, 2.5 µm, or 3 µm, etc. Of course, it can also be other values within the above range, and this disclosure does not limit it here. Preferably, the minimum particle size D00 for the anode material is 1 µm-2 µm.

In some embodiments, a D90 of the anode material is in a range from 14 µm to 25 µm. For example, it can be 14 µm, 17 µm, 20 µm, 23 µm, or 25 µm, etc. Of course, it can also be other values within the above range, and this disclosure does not limit it. In one embodiment, the anode material has a D90 of 18 µm to 20 µm.

Using a laser particle size analyzer to test anode materials, there exists a symmetrical distribution similar to a normal distribution. In the above symmetrical distribution, D90 is a particle size with a cumulative number distribution of 90% of the material particles, D00 is a minimum size of the material particles that can be measured in the above distribution, and D50 is a particle size with a cumulative number distribution of 50% of the material particles, also known as the median particle size. An ideal battery material needs to have a narrow particle size distribution. Studies have shown that too small material particles can make it difficult for silicon to deposit, and the battery material continuously consumes electrolyte during cycling, resulting in a deterioration of capacity retention. However, excessively large material particles will deposit too much silicon matrix, which makes the anode material have a greater expansion rate, making it easy to cause particle pulverization during cycling, which can lead to continuous thickening of SEI. Therefore, by controlling the particle size distribution, the cycling performance of the anode materials can be improved. In the anode material of this disclosure, the particle size distribution of the material is relatively concentrated, which not only reduces the above-mentioned problems, but also further has a high packing density, which facilitates improvement of the electrochemical and cycling performance of the anode material.

In some embodiments, the porous matrix includes porous carbon.

In some embodiments, the anode material is shown in the Raman spectrum obtained by Raman spectroscopy using a measurement light source having a wavelength of 633nm. The anode material has a characteristic peak I_{D} at 1310 cm⁻¹ to 1350 cm⁻¹ and a characteristic peak I_{G} at 1580 cm⁻¹ to 1620 cm⁻¹. The I_{D}/I_{G} is in a range from 1.6 to 2.5, which can be, for example, 1.6, 1.8, 2.0, 2.2, 2.3, or 2.5. Of course, other values within the above range can also be used, and this disclosure does not limit it. In the Raman spectrum of the present disclosure, the D peak corresponds to the pores and defects of the porous carbon, and the G peak corresponds to the E2g stacking method of graphite layers of the porous carbon. The present disclosure uses I_{D}/I_{G} to represent a difficulty of the silicon depositing on the porous carbon. Within the above defined range, it indicates that porous carbon has more pores and defects, and its surface and interior have more silicon nucleation sites, which is conducive to silicon deposition, and can greatly increase the silicon loading in the anode material, thereby improving the effective utilization rate of the silicon source, and thereby increasing the tap density and specific capacity of the entire anode material, and improving the energy density of the entire battery material made of the anode material. Preferably, I_{D}/I_{G} is in a range from 1.6 to 2.3. Further preferably, I_{D}/I_{G} is in a range from 1.8 to 2.2.

In some embodiments, a specific surface area of the anode material ranges from 1.0 m²/g to 10.0 m²/g. For example, it can be 1.0 m²/g, 2.0 m²/g, 3.0 m²/g, 4.0 m²/g, 5.0 m²/g, 6.0 m²/g, 7.0 m²/g, 8.0 m²/g, 9.0 m²/g, or 10.0 m²/g, etc. Of course, other values within the above range are also possible, and this disclosure does not limit it. It can be understood that controlling the specific surface area of the anode material within the above range can reduce formation of the SEI film on the anode material and improve electrochemical performance of the anode material.

In some embodiments, a powder conductivity of the anode material is in a range from 0.1 S/cm to 10.0 S/cm. For example, it can be 0.1 S/cm, 1.0 S/cm, 3.0 S/cm, 5.0 S/cm, 7.0 S/cm, 9.0 S/cm, or 10.0 S/cm, etc. Of course, it can also be other values within the above range, and this disclosure does not limit it. It can be understood that controlling the powder conductivity of the anode material within the above range can improve the rate performance of the anode material.

In some embodiments, the powder conductivity of the anode material ranges from 0.1 S/cm to 10.0 S/cm. For example, it can be 0.1 S/cm, 1.0 S/cm, 3.0 S/cm, 5.0 S/cm, 7.0 S/cm, 9.0 S/cm, or 10.0 S/cm, etc. Of course, it can also be other values within the above range, and this disclosure does not limit it. It can be understood that controlling the powder conductivity of the anode material within the above range can improve the rate performance of the anode material.

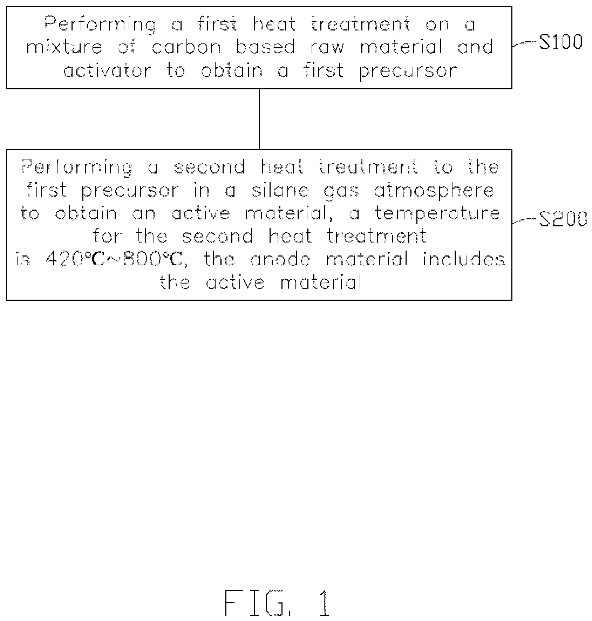

The present disclosure also provides a method for making an anode material, as shown in FIG. 1, including the following steps.

S100: mixing carbon-based raw material and activator in a certain proportion in a VC mixer having a processing capacity of 10L-50L, with a stirring frequency of 5-30HZ, and a stirring time of 30-90min. After mixing evenly, the mixture is transferred to a rotary furnace for a first heat treatment. During the heat treatment, the oxygen content in the rotary furnace is less than 100ppm, and a pressure of the rotary furnace is 10-100 pa. The heat-treated sample is mechanically grinded to obtain a first precursor having a particle size D50 of 5-15 um.

S200: performing a second heat treatment to the first precursor in an inert gas atmosphere. A deviation between a temperature of the reaction system and a set temperature value is less than 10 °C. After the reactor reaches a reaction temperature, it needs to be maintained at a constant reaction temperature for 10-60 minutes. A total reaction gas rate is 15-50L/min, a concentration of the silane is 10% -60%, and a pressure of the reaction system is 0-30Kpa. The active material is obtained after the reaction is complete, and the anode material includes the active material. A temperature for the second heat treatment is 420 °C-800 °C.

In the above technical solution, the present disclosure performs the first heat treatment on a mixture of the carbon-based raw material and the activator to form pores on surface and inside of the carbon-based raw material, obtaining porous carbon, which is the first precursor. Further, the porous carbon with introducing silane gas performs the second heat treatment. By controlling the temperature of the second heat treatment to 420 °C-800 °C, the silane can be fully decomposed to generate a large amount of silicon matrix in the form of SiH bonds. The silicon matrix is deposited inside and/or on the surface of the first precursor, thereby obtaining a core in which at least part of the silicon matrix is distributed in the pores of the porous carbon. A large amount of silicon matrix in the form of SiH bonds is conducive to improving a structural stability of the anode material, enhancing mechanical properties of the anode material, reducing the occurrence of side reactions between the anode materials and electrolytes, alleviating the volume expansion of the anode materials during lithium insertion stage and improving cycling stability of the anode material. Porous carbon is coated on at least part of the surface of the silicon matrix. On the one hand, porous carbon can act as an elastic conductor, providing transport paths for ions and electrons during the charging and discharging process of the anode material, increasing conductivity between the silicon matrix and the outside world, thereby improving the rate performance of the anode material. On the other hand, embedding the silicon matrix into the porous carbon can improve conductivity of the silicon matrix, thereby enhancing the rate performance of the material and meeting the requirements for achieving fast charging characteristics in batteries.

It can be understood that silane is fully decomposed to generate a larger amount of silicon matrix in the form of SiH bonds. That is, there are many SiH bonds in the chemical bonds in the silicon matrix. In the silicon matrix generated by incomplete decomposition of the silane, the silicon matrix exists in the form of SiH, SiH₂ bonds, and SiH₃ bonds. The silicon matrix prepared by the preparation method of this disclosure can fully decompose the silane into amorphous silicon without generating polycrystalline silicon. At the same time, more SiH bonds exist in the silicon matrix, so that a value of Z of the area of the vibration peak of SiH₂ bond to the area of the vibration peak of SiH bond in the anode material satisfies Z=0.01-5.0, thereby improving the cycling performance and expansion performance of the anode material.

The following provides a specific introduction to the preparation method of the present disclosure in conjunction with the embodiments. The preparation method of the anode material of the present disclosure includes the following steps.

S100: mixing carbon-based raw material and activator in a certain proportion in a VC mixer having a processing capacity of 10L-50L, with a stirring frequency of 5-30HZ, and a stirring time of 30-90min. After mixing evenly, the mixture is transferred to the rotary furnace for the first heat treatment. During the heat treatment, the oxygen content in the rotary furnace is less than 100ppm, and the pressure of the rotary furnace is 10-100 pa. The heat-treated sample is mechanically grinded to obtain a first precursor having a particle size D50 of 5-15um.

In some embodiments, the carbon-based raw material includes at least one of fruit shell carbon, straw carbon, resin carbon, asphalt carbon, and carbohydrates.

In some embodiments, the activator includes at least one of water vapor, alkaline substance, and template agent. The above-mentioned activator contacts with the carbon-based materials at a certain temperature for activation. The activators can corrode the surface of the carbon-based material at high temperatures, causing originally closed pores in the carbon-based material to reopen and further expand. Some structures generate new pores due to selective oxidation.

In some embodiments, the alkaline substance includes at least one of potassium hydroxide and sodium hydroxide.

In some embodiments, the template agent includes at least one of calcium hydroxide, calcium oxide, magnesium oxide, magnesium hydroxide, melamine, aluminum oxide, and polymer template agent. Examples of the polymer template agent includes polyurethane, melamine resin, cellulose, polystyrene, polymethyl methacrylate, etc.

In some embodiments, the temperature for the first heat treatment is between 600 °C and 2000 °C, such as 600 °C, 800 °C, 1000 °C, 1100 °C, 1500 °C, 1800 °C, or 2000 °C. Of course, other values within the above range are also possible and are not limited. It can be understood that controlling the temperature of the first heat treatment within the above range is beneficial for activating the carbon-based raw material into pores and increasing the porosity of the porous carbon. Preferably, the temperature for the first heat treatment is 800 °C-1500 °C. Further preferably, the temperature for the first heat treatment is 800 °C-1100 °C.

In some embodiments, the heating rate of the first heat treatment is between 5 °C/min and 20 °C/min. For example, it can be 5 °C/min, 10 °C/min, 15 °C/min, 18 °C/min, or 20 °C/min, etc. Of course, it can also be other values within the above range, which are not limited.

In some embodiments, a time for the first heat treatment is between 2 hours and 10 hours, such as 2 hours, 3 hours, 5 hours, 8 hours, or 10 hours. Of course, other values within the above range are also possible and are not limited here.

In some embodiments, the first heat treatment further includes steps of washing and drying the material obtained from the first heat treatment.

In some embodiments, washing includes: acid washing the material obtained from the first heat treatment with and then washing it with water. Wherein the acid used in acid washing is at least one of hydrochloric acid, sulfuric acid, nitric acid, hydrofluoric acid, phosphoric acid, perchloric acid, acetic acid, and benzoic acid. A concentration of the acid ranges from 1 mol/L to 5 mol/L. For example, it can be 1 mol/L, 2 mol/L, 3 mol/L, 4 mol/L, or 5 mol/L. Of course, it can also be other values within the above range, which are not limited. It can be understood that a purpose of acid washing is to remove excess activators from the material. The first precursor is washed with deionized water after acid washing to wash the product to neutral.

In some embodiments, the drying temperature ranges from 80 °C to 150 °C, and a specific temperature can be 80 °C, 90 °C, 100 °C, 110 °C, 120 °C, 130 °C, 140 °C, and 150 °C, among others. Of course, other values within the above range are also possible and are not limited here.

In some embodiments, the drying time ranges from 24 hours to 72 hours, and the specific time can be 24 hours, 30 hours, 36 hours, 42 hours, 48 hours, 52 hours, 60 hours, 72 hours, etc. Of course, it can also be other values within the above range and is not limited.

In some embodiments, the drying equipment is any one of an oven, a box furnace, and a double cone dryer.

In some embodiments, the first heat treatment further includes steps of pulverization and sieving the material obtained from the first heat treatment.

In some embodiments, the crushing uses at least one of ball milling pulverization, air flow pulverization, and mechanical pulverization, and mechanical pulverization is preferred.

In some embodiments, a median particle size of the first precursor after pulverization and sieving is between 5 µm and 10 µm, which can be, for example, 5 µm, 6 µm, 7 µm, 8 µm, 9 µm, or 10 µm, and can also be other values within the above range, without limitation.

S200: performing the second heat treatment to the first precursor in silane gas atmosphere to obtain the anode material. The temperature of the second heat treatment is in a range from 420 °C to 800 °C.

In some embodiments, the inflow rate of the silane is from 1 L/min to 10 L/min, such as 1 L/min, 3 L/min, 5 L/min, 7 L/min, 9 L/min, or 10 L/min. Of course, other values within the above range are also possible and are not limited. Within the above limited range, it is beneficial for the silane to fully pyrolyze and generate a larger amount of silicon matrix in the form of SiH bonds.

In some embodiments, the temperature of the second heat treatment is in a range from 420 °C to 800 °C. For example, it can be 420 °C, 500 °C, 550 °C, 600 °C, 650 °C, 700 °C, 750 °C, or 800 °C, etc. Of course, it can also be other values within the above range, which are not limited. In some embodiments, the temperature for the second heat treatment is 550 °C-650 °C. Within the above limited range, it is beneficial for sufficient pyrolysis of silane gas to generate a larger amount of silicon matrix in the form of SiH bonds, which is beneficial for improving the structural stability of the anode material, and thereby enhancing cycling and expansion properties of the anode material. If the temperature is higher than 800 °C, it is easy for the amorphous silicon generated by pyrolysis of the silane gas to transform into crystalline silicon, resulting in poor expansion performance of the anode material. If the second heat treatment temperature is lower than 420 °C, pyrolysis of the silane gas is not sufficient, a conversion rate of the silane pyrolysis is low, and the silicon matrix for the silane pyrolysis mainly exists in coexistence of SiH bonds, SiH₂ bonds, and SiH₃ bonds, which reduces the structural stability of the anode material.

In some embodiments, a heating rate of the second heat treatment is in a range from 3 °C/min to 20 °C/min, which can be 3 °C/min, 5 °C/min, 8 °C/min, 10 °C/min, 13 °C/min, 16 °C/min, 18 °C/min, or 20 °C/min, etc. Of course, other values within the above range are also possible and are not limited.

In some embodiments, the second heat treatment is carried out in a protective gas atmosphere, which includes at least one of nitrogen, argon, and helium.

In some embodiments, a time for the second heat treatment is between 100 min and 600 min, such as 100 min, 200 min, 300 min, 400 min, 500 min, or 600 min, etc. Of course, other values within the above range are also possible and are not limited.

In some embodiments, an equipment for the second heat treatment includes at least one of a kiln, a chemical vapor deposition equipment, and a chemical vapor infiltration equipment.

In some embodiments, it further includes mixing the coating material with the material obtained after the second heat treatment and performing a third heat treatment after the second heat treatment.

In this step, the coating material is mixed with the material obtained from the second heat treatment and subjected to the third heat treatment to form a coating layer. On one hand, it can reduce occurrence of side reactions caused by electrolyte entering the anode material, resulting in a decrease in initial efficiency and capacity. On the other hand, it can work together with the core material to alleviate a volume expansion of the silicon matrix, reduce a volume expansion of the entire anode material, and reduce swelling of the electrode sheet made of the anode material.

In some embodiments, the coating material includes at least one of carbon source, metal oxide, and metal sulfide.

In some embodiments, the carbon source includes at least one of a gaseous carbon source and a solid carbon source.

In some embodiments, the gaseous carbon source includes at least one of acetylene, methane, propylene, benzene, ethanol, methanol, ethylene, propane, and butane.

In some embodiments, an inlet flow rate of the gaseous carbon source is in a range from 1L/min to 15L/min. For example, it can be 1 L/min, 3 L/min, 5 L/min, 8 L/min, 10 L/min, 12 L/min, or 15 L/min, etc. Of course, it can also be other values within the above range, which are not limited.

In some embodiments, the solid carbon source includes at least one of sucrose, fructose, glucose, asphalt, phenolic resin, polyimide, citric acid, epoxy resin, amino resin, polystyrene, polyacrylic acid, carboxymethyl cellulose, and acetate butyrate fiber.

In some embodiments, a weight ratio of the solid carbon source to the material obtained from the second heat treatment is (0.2-2): 1. For example, it can be 0.2:1, 0.5:1, 0.8:1, 1.5:1, 1.8:1, or 2:1, etc. Of course, it can also be other values within the above range, which are not limited.

In some embodiments, the metal oxide includes at least one of iron oxide, zinc oxide, tin oxide, copper oxide, and titanium oxide.

In some embodiments, the metal sulfide includes at least one of tin sulfide, molybdenum sulfide, titanium sulfide, iron sulfide, and copper sulfide.

In some embodiments, a weight ratio of the metal oxide to the material obtained from the second heat treatment is (0.2-2): 1. For example, it can be 0.2:1, 0.5:1, 0.8:1, 1.5:1, 1.8:1, or 2:1, etc. Of course, it can also be other values within the above range, which are not limited.

In some embodiments, a weight ratio of metal sulfide to the material obtained from the second heat treatment is (0.2-2): 1. For example, it can be 0.2:1, 0.5:1, 0.8:1, 1.5:1, 1.8:1, or 2:1, etc. Of course, it can also be other values within the above range, which are not limited.

In some embodiments, the temperature of the third heat treatment is in a range from 300 °C to 1100 °C. For example, it can be 300 °C, 400 °C, 500 °C, 600 °C, 700 °C, 800 °C, 900 °C, 1000 °C, 1100 °C, etc. Of course, it can also be other values within the above range, which are not limited. Within the above limited range, it is possible to ensure complete carbonization of the coating material without significantly affecting the silicon matrix of the core. In order to reduce changes in the silicon matrix during the third heat treatment process, the preferred temperature for the third heat treatment is 400 °C-800 °C. Further preferably, the temperature for the third heat treatment is 500 °C-700 °C.

In some embodiments, the time for the third heat treatment is between 2 hours and 5 hours, such as 2 hours, 2.5 hours, 3 hours, 3.5 hours, 4 hours, 4.5 hours, or 5 hours. Of course, other values within the above range are also possible and are not limited.

Thirdly, the present disclosure provides a lithium-ion battery including the anode material prepared by the above-mentioned preparation method.

The embodiments of the present disclosure are not limited to these examples as long as they do not exceed the main idea.

### Embodiment 1

(1) 400g of coal tar pitch, 120g of calcium hydroxide, and 50g of potassium hydroxide were mixed using a VC mixer with a stirring frequency of 20Hz for 30 minutes to prepare a precursor having a uniform pore size distribution. After mixing evenly, the precursor was placed in a rotary furnace with an oxygen content of less than 100ppm and a pressure of 10-100 pa. The mixture was heated to 700 °C at a rate of 10 °C/min and kept at a constant temperature of 700 °C for 5 hours. The resulting material was soaked in 2 mol/L hydrochloric acid for 1 hour, filtered and washed with pure water until neutral, put in a 100 °C oven for 4 hours, and then grinded and sieved through a 325 mesh sieve.
(2) 200g of the material obtained in step (1) was placed into a CVD reactor and the temperature was raised to 550 °C at a rate of 5 °C/min, kept the temperature of 550 °C for 60 minutes to ensure temperature stability of the CVD reactor, and 0.6 L/min of SiH₄ and 0.6 L/min of nitrogen gas were introduced into the CVD reactor, a pressure of the reaction system was 0-30 Kpa, and the reaction system reacted for 300 minutes to obtain the first precursor.
(3) the first precursor was placed in a CVD reactor, the temperature was raised to 700 °C at a rate of 10 °C/min, 1 L/min of C₃H₆ and 2 L/min of nitrogen gas were introduced into the CVD reactor, and reacted for 150 minutes.
(4) the material obtained in step (3) was placed in a VC mixer, grinded and sieved through a 325 mesh sieve to obtain the anode material.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 2

(1) 400g of coal tar pitch, 120g of calcium hydroxide, and 50g of potassium hydroxide were mixed using a VC mixer with a stirring frequency of 20Hz for 30 minutes to prepare a precursor having a uniform pore size distribution. After mixing evenly, the precursor was placed in a rotary furnace with an oxygen content of less than 100ppm and a pressure of 10-100pa. The mixture was heated to 900 °C at a rate of 10 °C/min and kept at a constant temperature of 900 °C for 5 hours. The resulting material was soaked in 2 mol/L hydrochloric acid for 1 hour, filtered and washed with pure water until neutral, put in a 100 °C oven for 4 hours, and then grinded and sieved through a 325 mesh sieve.
(2) 200g of the material obtained in step (1) was placed into a CVD reactor and the temperature was raised to 550 °C at a rate of 5 °C/min, kept the temperature of 550 °C for 60 minutes to ensure temperature stability of the CVD reactor, and 0.6 L/min of SiH₄ and 0.6 L/min of nitrogen gas were introduced into the CVD reactor, a pressure of the reaction system was 0-30Kpa, and the reaction system reacted for 300 minutes to obtain the first precursor.
(3) the first precursor was placed in a CVD reactor, the temperature was raised to 700 °C at a rate of 10 °C/min, 1 L/min of C₃H₆ and 2 L/min of nitrogen gas were introduced into the CVD reactor, and reacted for 150 minutes.
(4) the material obtained in step (3) was placed in a VC mixer, grinded and sieved through a 325 mesh sieve to obtain the anode material.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

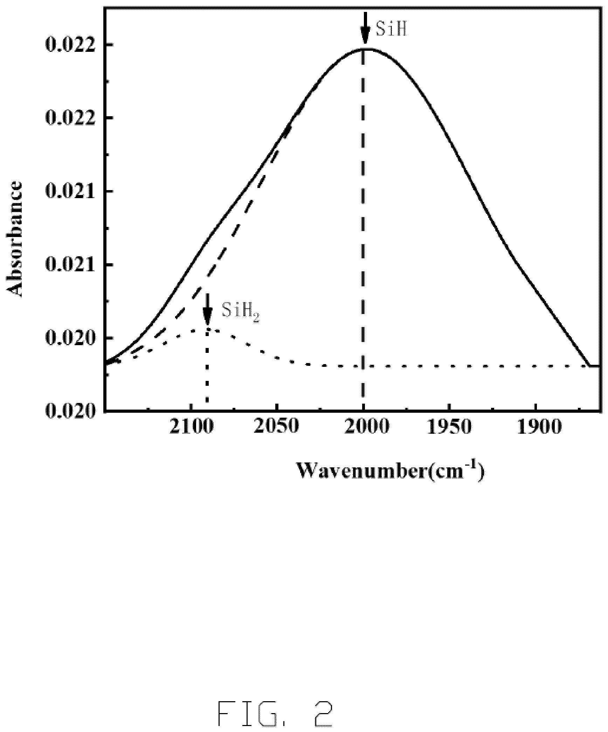

The infrared spectrum of the anode material prepared in this embodiment is shown in FIG. 2. It can be seen from FIG. 2 that the anode material prepared in the embodiment 2 has a stretching vibration peak of SiH₂ bond at a wave number of 2090 cm⁻¹ and a stretching vibration peak of SiH bond at a wave number of 2000 cm⁻¹. The above infrared spectrum data was imported into Origin software, and the stretching vibration peak of SiH bond at a wave number of 2000 cm⁻¹ and the stretching vibration peak of SiH₂ bond at a wave number of 2090 cm⁻¹ were used as a double peak fitting positions, a Gauss fitting optimization method was used to fit the two peaks, and the fitting variance R² was in the range of 0.6-0.95. A value of Z value of peak area represents a ratio of SiH bond and SiH₂ bond, and also represents a degree of silane pyrolysis reaction. In addition, no vibration peak of SiH₃ bond was found at 907cm⁻¹ in FIG. 2, indicating absence of SiH₃ bond in the silicon based carbon material, further indicating that pyrolysis of the silane is relatively sufficient.

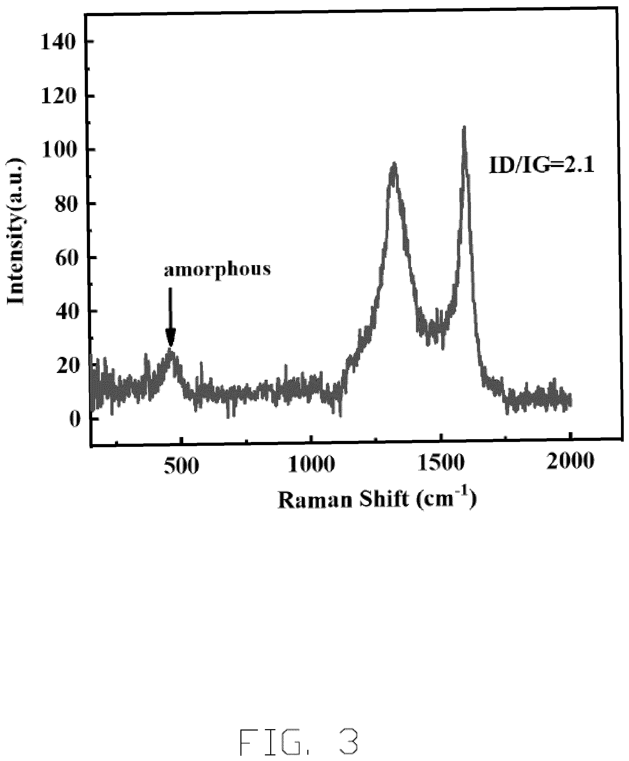

The Raman spectrum of the anode material prepared in this embodiment is shown in FIG. 3. It can be seen from FIG. 3 that the anode material of embodiment 2 has a characteristic peak at 480 cm⁻¹, identified as a characteristic peak of amorphous silicon, indicating that the silane pyrolyzes fully and generates amorphous silicon in this embodiment.

### Embodiment 3

(1) 400g of coal tar pitch, 120g of calcium hydroxide, and 50g of potassium hydroxide were mixed using a VC mixer with a stirring frequency of 20Hz for 30 minutes to prepare a precursor having a uniform pore size distribution. After mixing evenly, the precursor was placed in a rotary furnace with an oxygen content of less than 100ppm and a pressure of 10-100pa. The mixture was heated to 1100 °C at a rate of 10 °C/min and kept at a constant temperature of 1100 °C for 5 hours. The resulting material was soaked in 2 mol/L hydrochloric acid for 1 hour, filtered and washed with pure water until neutral, put in a 100 °C oven for 4 hours, and then grinded and sieved through a 325 mesh sieve.
(2) 200g of the material obtained in step (1) was placed into a CVD reactor and the temperature was raised to 550 °C at a rate of 5 °C/min, kept the temperature of 550 °C for 60 minutes to ensure temperature stability of the CVD reactor, and 0.6 L/min of SiH₄ and 0.6 L/min of nitrogen gas were introduced into the CVD reactor, a pressure of the reaction system was 0-30Kpa, and the reaction system reacted for 300 minutes to obtain the first precursor.
(3) the first precursor was placed in a CVD reactor, the temperature was raised to 700 °C at a rate of 10 °C/min, 1 L/min of C₃H₆ and 2 L/min of nitrogen gas were introduced into the CVD reactor, and reacted for 150 minutes.
(4) the material obtained in step (3) was placed in a VC mixer, grinded and sieved through a 325 mesh sieve to obtain the anode material.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 4

Differences between the Embodiment 4 and the Embodiment 2 are that in step (2): the temperature was raised to 420 °C at a rate of 5 °C/min, 0.6 L/min of SiH₄ and 0.6L /min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 5

Differences between the Embodiment 5 and the Embodiment 2 are that in step (2): the temperature was raised to 450 °C at a rate of 5 °C/min, 0.6 L/min of SiH₄ and 0.6 L/min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 6

Differences between the Embodiment 6 and the Embodiment 2 are that in step (2): the temperature was raised to 480 °C at a rate of 5 °C/min, 0.6 L/min of SiH₄ and 0.6L /min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 7

Differences between the Embodiment 7 and the Embodiment 2 are that in step (2): the temperature was raised to 510 °C at a rate of 5 °C/min, 0.6 L/min of SiH₄ and 0.6L /min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 8

Differences between the Embodiment 8 and the Embodiment 2 are that in step (2): the temperature was raised to 600 °C at a rate of 5 °C/min, 0.6 L/min of SiH₄ and 0.6 L/min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 9

Differences between the Embodiment 9 and the Embodiment 2 are that in step (2): the temperature was raised to 650 °C at a rate of 5 °C/min, 0.6 L/min of SiH₄ and 0.6 L/min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 10

Differences between the Embodiment 10 and the Embodiment 2 are that in step (2): the temperature was raised to 800 °C at a rate of 5 °C/min, 0.6 L/min of SiH₄ and 0.6 L/min of nitrogen gas were introduced and reacted for 300 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 11

Differences between the Embodiment 11 and the Embodiment 4 are that in step (2): the temperature was raised to 420 °C at a rate of 5 °C/min, 0.6 L/min of SiH₄ and 0.6 L/min of nitrogen gas were introduced and reacted for 350 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 12

Differences between the Embodiment 12 and the Embodiment 8 are that in step (2): the temperature was raised to 650 °C at a rate of 5 °C/min, 0.6 L/min of SiH₄ and 0.6 L/min of nitrogen gas were introduced and reacted for 270 minutes.

The anode material obtained in this embodiment includes a core and a coating layer covering a surface of the core. The core includes porous carbon and silicon matrix inside and/or on the surface of the porous carbon. The silicon matrix mostly exists in the form of SiH bonds, and the coating layer is a carbon layer.

### Embodiment 13

(1) 500g coconut shell charcoal was placed in a reactor and heated to 900 °C at a rate of 10 °C/min. 30 g/min of water vapor was introduced for activation for 120 minutes. The resulting material was then soaked in 2 mol/L hydrochloric acid for 1 hour, filtered, and washed with pure water until neutral. After 4 hours in a 100 °C oven, it was grinded and sieved through a 325 mesh sieve.
(2) 200g of the material obtained in step (1) was placed into a CVD reactor and the temperature was raised to 550 °C at a rate of 5 °C/min, the temperature of 550 °C was kept for 60 minutes to ensure temperature stability of the CVD reactor; 0.6 L/min of SiH₄ and 0.6L/min of nitrogen gas were introduced into the reactor, a pressure of the reaction system was 0-30 Kpa and reacted for 300 minutes to obtain the first precursor.
(3) the first precursor was placed in a CVD reactor, the temperature was raised to 700 °C at a rate of 10 °C/min, 1L/min of C₃H₆ and 2L/min of nitrogen gas were introduced into the CVD reactor and reacted for 150 minutes.
(4) the material obtained in step (3) was placed in a VC mixer, grinded and sieved through a 325 mesh sieve to obtain the anode material.

The anode material obtained in this embodiment includes a core and a coating layer covering the surface of the core. The core includes porous carbon and a silicon matrix located inside and/or on the surface of the porous carbon. The silicon matrix is mostly present in the form of SiH bonds, and the coating layer is a carbon layer.

### Comparative Example 1

(1) 400g of coal tar pitch, 120g of calcium hydroxide, and 50g of potassium hydroxide were mixed using a VC mixer with a stirring frequency of 20Hz for 30 minutes to prepare a precursor having a uniform pore size distribution. After mixing evenly, the precursor was placed in a rotary furnace with an oxygen content of less than 100ppm and a pressure of 10-100 pa. The mixture was heated to 700 °C at a rate of 10 °C/min and kept at a constant temperature of 700 °C for 5 hours. The resulting material was soaked in 2 mol/L hydrochloric acid for 1 hour, filtered and washed with pure water until neutral, put in a 100 °C oven for 4 hours, and then grinded and sieved through a 325 mesh sieve.
(2) 200g of the material obtained in step (1) was placed into a CVD reactor and the temperature was raised to 400 °C at a rate of 5 °C/min, kept the temperature of 400 °C for 60 minutes to ensure temperature stability of the CVD reactor, and 0.6 L/min of SiH₄ and 0.6 L/min of nitrogen gas were introduced into the CVD reactor, a pressure of the reaction system was 0-30 Kpa, and the reaction system reacted for 300 minutes to obtain the first precursor.
(3) the first precursor was placed in a CVD reactor, the temperature was raised to 700 °C at a rate of 10 °C/min, 1 L/min of C₃H₆ and 2 L/min of nitrogen gas were introduced into the CVD reactor, and reacted for 150 minutes.
(4) the material obtained in step (3) was placed in a VC mixer, grinded and sieved through a 325 mesh sieve to obtain the anode material.

The anode material obtained in this comparative example includes a core and a coating layer covering a surface of the core. The core includes porous carbon and silicon matrix inside and/or on the surface of the porous carbon. The silicon matrix exists in the form of SiH bonds, SiH₂ bonds, and SiH₃ bonds, and the coating layer is a carbon layer.

### Comparative Example 2

(1) 400g of coal tar pitch, 120g of calcium hydroxide, and 50g of potassium hydroxide were mixed using a VC mixer with a stirring frequency of 20Hz for 30 minutes to prepare a precursor having a uniform pore size distribution. After mixing evenly, the precursor was placed in a rotary furnace with an oxygen content of less than 100ppm and a pressure of 10-100 pa. The mixture was heated to 700 °C at a rate of 10 °C/min and kept at a constant temperature of 700 °C for 5 hours. The resulting material was soaked in 2 mol/L hydrochloric acid for 1 hour, filtered and washed with pure water until neutral, put in a 100 °C oven for 4 hours, and then grinded and sieved through a 325 mesh sieve.
(2) 200g of the material obtained in step (1) was placed into a CVD reactor and the temperature was raised to 900 °C at a rate of 5 °C/min, kept the temperature of 900 °C for 60 minutes to ensure temperature stability of the CVD reactor, and 0.6 L/min of SiH₄ and 0.6 L/min of nitrogen gas were introduced into the CVD reactor, a pressure of the reaction system was 0-30 Kpa, and the reaction system reacted for 300 minutes to obtain the first precursor.
(3) the first precursor was placed in a CVD reactor, the temperature was raised to 700 °C at a rate of 10 °C/min, 1 L/min of C₃H₆ and 2 L/min of nitrogen gas were introduced into the CVD reactor and reacted for 150 minutes.
(4) the material obtained in step (3) was placed in a VC mixer, grinded and sieved through a 325 mesh sieve to obtain the anode material.

The anode material obtained in this comparative example includes a core and a coating layer covering a surface of the core. The core includes porous carbon and polycrystalline silicon inside and/or on the surface of the porous carbon. The coating layer is a carbon layer.

### Performance Testing:

1. Testing method for porosity, pore size, and proportion can be obtained by calculating a product of a number of pores per unit weight of the material (cm³/g) and a bulk density (g/cm³). Therefore, the porosity can be expressed based on volume as (volume/volume). The bulk density can be obtained by dividing a mass of the material by a volume of the sample. A number of pores per unit weight can be further measured under known conditions using nitrogen adsorption methods (micropores and mesopores) or mercury porosimeters (macropores).
2. A laser particle size analyzer is used to measure the D50, D00, and D90 of the anode material, which exhibit a symmetrical distribution similar to a normal distribution. D90 is a particle size with a cumulative distribution of 90% of the material particles. D00 is a minimum size of material particles, which refers to the smallest diameter that can be measured in the above distribution. D50 is a particle size of the material with a cumulative distribution of 50%, also known as the median particle size.
3. A specific weight method is used to determine a mass proportion of the silicon matrix in the anode materials. Specifically, the silicon matrix can be burned at high temperature in air to generate silicon dioxide. By calculating the mass of silicon dioxide, the mass of silicon matrix can be derived, and then the mass proportion of silicon matrix in the anode materials can be calculated.
4. Renishaw confocal Raman spectrometer from the UK is used as the testing instrument, model in Via, testing conditions: using a 633nm laser, with a testing range of 800 cm⁻¹ to 2000 cm⁻¹.
5. Thermo Scientific iN10 instrument from the United States is used for Fourier infrared spectroscopy testing, with a spectral range from 4000 cm⁻¹ to 400 cm⁻¹. The infrared test data was imported into Origin software, and the stretching vibration peak of SiH bond at wavenumber of 1985 cm⁻¹ and the stretching vibration peak of SiH₂ bond at wavenumber of 2080 cm⁻¹ as the double peak fitting positions. The infrared spectrum at wavenumber 1750- 2220 cm⁻¹ is optimized using Gauss fitting method, and a value of Z of peak area represents the ratio of SiH bond to SiH₂ bond.
6. Lithium-ion batteries were prepared using the anode materials obtained from Comparative Examples 1-2 and Embodiments 1-13 as active materials. The preparation process is as follows.

Binder preparation: polyacrylic acid and sodium carboxymethyl cellulose were mixed in a 1:1 mass ratio, a certain amount of pure water was added, and was stirred magnetically for 6-12 hours. Silicon composite material and conductive agent were added to a binder, and a mass ratio of the silicon composite material, conductive agent, to the binder is 70:15:15, and was stirred magnetically for 6-12 hours to obtain a slurry. Preparation of electrode sheets: the slurry was applied evenly onto a copper foil, air dried, sliced and dried to obtain silicon composite electrode sheets.

Button type batteries were assembled to test their electrochemical performance, wherein the battery case used is CR2032, with metal lithium sheet as the counter electrode and LiPF₆ of 1 M as the electrolyte. The embodiments 1 to 13 are denoted as S1 to S13, and Comparative Examples 1 to 2 are denoted as D1 to D2.

**Table 1 Parameters of the Anode Materials in Embodiments and Comparative Examples**

| Sample | Average particle size of silicon matrix (nm) | Silicon content (%) | Anode material D00 (µm) | Anode material D50 (µm) | Anode material D90 (µm) | Porosity of anode material (%) | I_{D}/I_{G} | vibrational peak area of SiH₂ bond | vibrational peak area of SiH bond | Z value |
|---|---|---|---|---|---|---|---|---|---|---|
| D1 | 9.2 | 38.9 | 1.5 | 8.5 | 22.3 | 10.0 | 2.5 | 427.5 | 63.7 | 6.71 |
| D2 | / | 50.11 | 1.8 | 9.9 | 25.1 | 3.1 | 2.2 | / | / | / |
| S1 | 2.9 | 49.1 | 1.9 | 7.7 | 18.9 | 3.4 | 2.5 | 36.7 | 458.8 | 0.08 |
| S2 | 3.0 | 47.5 | 1.8 | 7.5 | 18.4 | 4.8 | 2.1 | 32.4 | 462.9 | 0.07 |
| S3 | 3.3 | 46.2 | 1.6 | 7.3 | 18.1 | 6.8 | 1.7 | 30.2 | 377.5 | 0.08 |
| S4 | 9.1 | 43.7 | 1.3 | 5.9 | 14.0 | 8.5 | 2.2 | 772.1 | 177.1 | 4.36 |
| S5 | 8.5 | 46.5 | 1.2 | 6.7 | 14.9 | 6.7 | 2.1 | 613.9 | 220.9 | 2.78 |
| S6 | 7.7 | 46.8 | 1.5 | 6.8 | 15.3 | 6.0 | 2.1 | 512.4 | 507.3 | 1.01 |
| S7 | 5.4 | 47.4 | 1.7 | 8.1 | 19.0 | 4.4 | 2.1 | 134.1 | 319.4 | 0.42 |
| S8 | 8.7 | 48.6 | 1.3 | 8.9 | 23.1 | 4.0 | 2.1 | 30.5 | 762.5 | 0.04 |
| S9 | 10.0 | 50.3 | 2.0 | 10.0 | 25.0 | 3.1 | 2.1 | 28.9 | 722.5 | 0.04 |
| S10 | 10.1 | *50.5* | 2.0 | 10.1 | 25.1 | 3.2 | 2.1 | 10.1 | 505.0 | 0.02 |
| S11 | 9.2 | 47.5 | 1.8 | 8.6 | 23.7 | 5.0 | 2.2 | 486.6 | 99.9 | 4.87 |
| S12 | 9.8 | 47.6 | 1.9 | 9.5 | 24.5 | 5.3 | 2.1 | 32.6 | 815.0 | 0.04 |
| S13 | 3.2 | 48.0 | 2.0 | 7.8 | 22.2 | 4.7 | 2.3 | 31.8 | 397.5 | 0.08 |

**Table 2 Electrochemical Properties of Anode Materials Prepared by Embodiments and Comparative Examples**

| Sample | Capacity (mAh/g) | Initial Efficiency (%) | Electrode Expansion Rate (%) | 50 cycles Retention Rate (%) |
|---|---|---|---|---|
| D1 | 1400 | 81.5 | 39.8 | 76.2 |
| D2 | 1930 | 91.0 | 40.0% | 82.2 |
| S1 | 1905 | 90.7 | 38.4 | 83.6 |
| S2 | 1830 | 91.8 | 35.4 | 92.0 |
| S3 | 1750 | 91.1 | 37.9 | 88.4 |
| S4 | 1510 | 87.7 | 37.5 | 86.7 |
| S5 | 1648 | 89.3 | 37.3 | 91.3 |
| S6 | 1672 | 89.9 | 37.0 | 90.7 |
| S7 | 1694 | 90.5 | 36.6 | 88.9 |
| S8 | 1877 | 90.8 | 37.6 | 86.7 |
| S9 | 1933 | 91.1 | 38.0 | 85.2 |
| S10 | 1944 | 91.2 | 38.8 | 84.9 |
| S11 | 1799 | 91.3 | 38.1 | 85.5 |
| S12 | 1727 | 90.7 | 38.6 | 83.3 |
| S13 | 1850 | 91.7 | 36.0 | 89.5 |

By comparison of test results from Tables 1 to 2, it can be found that the anode material of this disclosure includes silicon matrix and porous carbon, at least a portion of the silicon matrix is distributed in the pores of the porous carbon, and a value of Z of the vibration peak area of SiH₂ bonds to the vibration peak area of SiH bonds in the anode material is 0.01-5.0. This indicates that during the preparation process of the anode material, pyrolysis of the silane is sufficient, resulting in more silicon matrix in the form of amorphous silicon with SiH bonds in the anode material, which can alleviate the volume expansion of the anode material, reduce the swelling of the electrode sheet prepared by the anode material, and improve the cycling and rate performance of the anode material.

Under a same condition, the greater the value of I_{D}/I_{G}, the easier it is for silane to deposit on carbon materials. However, excessive silicon deposition can reduce the cycling and rate performance of the anode material. In Embodiments 1-3, as the heat treatment temperature increases in the step (1), the value of I_{D}/I_{G} gradually decreases. In Embodiment 2 of this disclosure, the silicon matrix deposition amount of the anode material is appropriate, resulting in optimal both of the initial efficiency and expansion performance of the anode material.

The pyrolysis temperature of the silane in this disclosure has a significant impact on the performance of anode materials. In Embodiments 2, 4, 5, 6, 7, 8, 9, and 10, as the pyrolysis temperature of the silane increases, the value of Z decreases, indicating that the pyrolysis of the silane is becoming more and more sufficient, and the conversion rate of pyrolysis of the silane is improved. However, the high pyrolysis temperature of the silane can lead to a transformation of amorphous silicon to crystalline silicon. Therefore, when the pyrolysis temperature of the silane into silicon matrix is 550 °C, the anode material can simultaneously achieve better cycling performance and expansion performance.

In Embodiments 4 and 11, at a certain temperature and under the same conditions of silane deposition, a pyrolysis degree of the silane did not change significantly with the extension of reaction time, indicating that whether pyrolysis of the silane was sufficiently affected mainly depends on the pyrolysis temperature of silane.

The anode material prepared by comparative example 1 has a lower pyrolysis temperature of silane, resulting in a lower conversion rate of silane pyrolysis and a less loading amount of the silicon on the porous substrate. SiH₂ bonds, SiH₃ bonds, and SiH bonds exist in the silicon matrix where the silane is not fully pyrolyzed, and the amount of SiH bonds is relatively little. This leads to Z not being within the range of 0.01-5.0, greatly reducing the structural stability of the anode material and resulting in poor cycling performance, capacity, and rate performance of the anode material.

For the anode material prepared in Comparative Embodiment 2, the pyrolysis temperature of the silane was too high, resulting in pyrolysis of the silane to produce polycrystalline silicon. The volume expansion of polycrystalline silicon was significant, leading to poor cycling and expansion performance of the anode material.

Although embodiments of the present invention have been shown and described, those skilled in the art may understand that various changes, modifications, substitutions, and variations can be made to these embodiments without departing from the principles and objectives of the present invention. The scope of the present invention is limited by the claims and their equivalents.

## Claims

1. An anode material comprising:
an active material, the active material comprising a porous matrix and a silicon matrix, at least a portion of the silicon matrix is distributed in pores of the porous matrix;
wherein in an infrared spectrum obtained by testing the anode material using an infrared spectrometer, there are a stretching vibration peak of SiH₂ bond at a wave number of 2090 cm⁻¹ and a stretching vibration peak of SiH bond at a wave number of 2000 cm⁻¹;
a ratio Z of an area of the stretching vibration peak of the SiH₂ bond to an area of the stretching vibration peak of the SiH bond is in a range from 0.01 to 5.0.

2. The anode material of claim 1, wherein the ratio Z is in a range from 0.05 to 3.0.

3. The anode material of claim 1, wherein a porosity of the anode material after removing the silicon matrix is in a range from 30% to 70%.

4. The anode material of claim 1, wherein an average pore size of the anode material after removing the silicon matrix is in a range from 0.2 nm to 10 nm.

5. The anode material of claim 1, wherein an average particle size of the silicon matrix is in a range from 1 nm to 10 nm.

6. The anode material of claim 1, wherein a weight percentage of the silicon matrix in the anode material is in a range from 5% to 90%.

7. The anode material of claim 1, wherein at least a portion of the silicon matrix is distributed on a surface of the porous matrix.

8. The anode material of claim 1, further comprising a coating layer on at least a portion of surfaces of the active material, wherein the anode material comprises at least one of feature (1) and feature (2):
(1) the coating layer comprises at least one of carbon material, metal oxide, and metal sulfide;
(2) a thickness of the coating layer is in a range from 5 nm to 500 nm.

9. The anode material of claim 8, wherein the anode material comprises at least one of the following features (1) to (3):
(1) the coating layer comprises the carbon material; the carbon material comprises at least one from graphene, soft carbon, hard carbon, and conductive polymers;
(2) the coating layer comprises the metal oxide, the metal oxide comprises at least one of titanium oxide, aluminum oxide, lithium oxide, cobalt oxide, and vanadium oxide;
(3) the coating layer comprises the metal sulfide, the metal sulfide comprises at least one of tin sulfide, molybdenum sulfide, titanium sulfide, iron sulfide, and copper sulfide.

10. The anode material of claim 1, wherein the anode material comprises at least one of the following features (1) to (3):
(1) a median particle size D50 of the anode material is in a range from 5 µm to 10 µm;
(2) a minimum particle size D00 of the anode material is in a range from 1 µm to 3 µm;
(3) a D90 of the anode material is in a range from 14 µm to 25 µm.

11. The anode material of claim 1, wherein the anode material is shown in a Raman spectrum obtained by a Raman spectroscopy using a measurement light source having a wavelength of 633nm, the anode material has a characteristic peak I_{D} at 1310 cm⁻¹ to 1350 cm⁻¹ and a characteristic peak I_{G} at 1580 cm⁻¹ to 1620 cm⁻¹, I_{D}/I_{G} is in a range from 1.6 to 2.5.

12. The anode material of claim 1, wherein a specific surface area of the anode material ranges from 1.0 m²/g to 10.0 m²/g.

13. The anode material of claim 1, wherein a powder conductivity of the anode material is in a range from 0.1 S/cm to 10.0 S/cm.

14. The anode material of claim 1, wherein a porosity of the anode material is in a range from 0.01% to 10%.

15. A lithium-ion battery, comprising the anode material of any one of claims 1 to 14.
